# EUROPÄISCHE PATENTSCHRIFT

(11) **EP 1 604 213 B1**
(45) Veröffentlichungstag und Bekanntmachung des Hinweises auf die Patenterteilung: **21.12.2011**
(21) Anmeldenummer: 04719418.8
(22) Anmeldetag: 11.03.2004
(51) Int. Cl.: G01P 3/489, G01D 5/244, G01D 1/14, G01P 21/02

(54) **VERFAHREN UND VORRICHTUNG ZUM ERFASSEN EINER DREHZAHL, INSBESONDERE EINER RADDREHZAHL EINES KRAFTFAHRZEUGS**
METHOD AND DEVICE FOR DETECTING A ROTATIONAL SPEED, ESPECIALLY THE ROTATIONAL SPEED OF THE WHEEL OF A VEHICLE
PROCEDE ET DISPOSITIF DE DETECTION D'UNE VITESSE DE ROTATION, EN PARTICULIER DE LA VITESSE DE ROTATION D'UNE ROUE D'UN VEHICULE A MOTEUR

(30) Priorität: 19.03.2003 DE 10312208
(43) Veröffentlichungstag der Anmeldung: 14.12.2005
(73) Patentinhaber: Lucas Automotive GmbH, 56070 Koblenz (DE)
(72) Erfinder: GOEBEL, Eugen, 56348 Dahlheim (DE); FUSS, Manfred, 56290 Dorweiler (DE); ALFTER, Ingo, 53489 Sinzig (DE)
(74) Vertreter: Thum, Bernhard
(86) Internationale Anmeldenummer: PCT/EP2004/002523
(87) Internationale Veröffentlichungsnummer: WO 2004/083871

(56) Entgegenhaltungen:
- US-A- 4 092 853
- US-A- 4 807 164
- US-A- 4 881 174

## Beschreibung

### Hintergrund der Erfindung

Die vorliegende Erfindung betrifft ein Verfahren nach dem Oberbegriff von Anspruch 1 und eine Vorrichtung nach dem Oberbegriff von Anspruch 15.

### Einschlägiger Stand der Technik

Derartige Verfahren und Vorrichtungen sind aus dem Stand der Technik bekannt. Für eine auf den gegenwärtigen Fahrzeugbetriebszustand abgestimmte Steuerung von Bremssystemen oder Schlupfregelsystemen neuerer Bauart ist es erforderlich, die Drehzahl einzelner Räder eines Kraftfahrzeugs permanent mit hinreichend hoher Genauigkeit zu überwachen. Hierfür werden Drehzahlsensoren verschiedener Bauart eingesetzt, wie beispielsweise induktive Sensoren, Hall-Sensoren oder dergleichen. Derartige Drehzahlsensoren liefern in der Regel ein pulsierendes Ausgangssignal mit Offset, welches sich im Idealfall zwischen lediglich zwei Stromwerten bewegt, einem niedrigen Stromwert, auch "Low"-Strom genannt, welcher beispielsweise bei 7mA liegt, und einem erhöhten Stromwert, auch "High"-Strom genannt, welcher, beispielsweise bei 14mA liegt. Der "Low"-Strom stellt sich beispielsweise dann ein, wenn der Sensor gerade kein Signal erfasst, wohingegen sich der "High"-Strom einstellt, wenn der Sensor ein Signal erfasst. Im Idealfall, d.h. bei einer Messung mit einer hochfrequenten Abtastung, erhält man eine Verteilung von Abtastwerten, welche sehr genau den tatsächlichen Verlauf des Ausgangssignals wiedergibt, wobei Signalflanken ebenfalls erfasst werden. Mit Hilfe statistischer Ansätze lassen sich dann diejenigen Abtastwerte ermitteln, deren Amplituden am häufigsten auftreten. Der Wert, der am häufigsten auftritt wird auch als "Modus" bezeichnet.

Es hat sich jedoch gezeigt, dass im Betrieb eines Kraftfahrzeugs die Drehzahlerfassung durch verschiedene Störeinflüsse beeinträchtigt werden kann. So kann es durch einen unerwünschten Serienwiderstand in der Sensorleitung, durch Kurzschlüsse oder Komponenten mit beeinträchtigter Funktion zu einer Verschiebung der Signalpegel des Ausgangssignals kommen. Dies führt dazu, dass die Auswerteelektronik die Signalpegel nicht mehr richtig erkennen kann und nach einer Weiterverarbeitung möglicherweise falsche digitale Impulse weitergibt. In der Folge würde das Bremssystem oder Schlupfregelsystem falsche Raddrehzahlen verwenden, so dass es zu einer Fehlfunktion kommen könnte. Um derartige Fehler erkennen zu können, müssen aus dem Ausgangssignal jeweils beide Strompegel erfasst werden, nämlich der "Low"-Strom sowie der "High"-Strom, um sicherzustellen, dass die Auswerteelektronik diese Signalpegel richtig in digitale Signale umwandeln kann. Da es sich allerdings bei dem Ausgangssignal um ein Frequenzsignal handelt, müsste nach dem Abtasttheorem von Shannon die Abtastfrequenz mindestens doppelt so hoch sein wie die höchste Frequenz, die in dem abzutastenden Signal auftritt. Dadurch würde sich eine Abtastfrequenz ergeben, welche eine erhebliche Rechenleistung eines Prozessors benötigt. Entsprechende Prozessoren sind kostenintensiv in ihrer Anschaffung und verteuern daher das Gesamtsystem in unerwünschter Weise.

Aus der DD 251 003 A5 ist eine Vorrichtung zur Messung der Geschwindigkeit eines beweglichen Körpers mit den Merkmalen des Oberbegriffs von Anspruch 15 bekannt. Diese Vorrichtung umfasst einen Sensor zur Erfassung der gegenwärtigen Drehzahl und gibt ein korrespondierendes Ausgangssignal aus. Eine Abtasteinrichtung tastet das Ausgangssignal des Drehzahlsensors mit einer vorbestimmten Abtastrate je Messzyklus ab. Eine Signalverarbeitungseinrichtung verarbeitet ein von der Abtasteinrichtung abgetastetes Ausgangssignal weiter und ermittelt die Amplituden der in dem Messzyklus erhaltenen Abtastwerte. Die Abtastwerte werden sodann in Beziehung zueinander gesetzt, so dass man eine Funktion erhält, die Auskunft über die derzeitige Geschwindigkeit des beweglichen Körpers gibt.

Eine weitere Vorrichtung zur Messung der Geschwindigkeit eines beweglichen Körpers ist aus US 4 881 174 bekannt.

### Der Erfindung zugrundeliegendes Problem

Es ist eine Aufgabe der vorliegenden Erfindung, ein Verfahren und eine Vorrichtung der eingangs bezeichneten Art bereitzustellen, bei welchen eine niedrige Abtastrate ausreicht um Fehler bei der Erfassung der Sensorsignale schnell und zuverlässig zu erkennen.

### Erfindungsgemäße Lösung

Diese Aufgabe wird durch ein Verfahren mit den Merkmalen des Anspruchs 1 und eine Vorrichtung mit den Merkmalen des Anspruchs 15 gelöst.

Dabei gibt der Drehzahlsensor ein die aktuelle Drehzahl charakterisierendes Ausgangssignal aus und das Ausgangssignal des Drehzahlsensors wird abgetastet und nach Maßgabe dabei erhaltener Abtastwerte weiterverarbeitet. Zur Lösung der vorstehend genannten Aufgabe sieht die Erfindung ferner vor, dass das Ausgangssignal mit einer vorbestimmten Abtastrate über wenigstens einen Messzyklus abgetastet wird, dass jeweils die Amplitude von in dem Messzyklus erhaltenen Abtastwerten ermittelt wird und dass anhand der Häufigkeit des Auftretens von Abtastwerten mit innerhalb eines vorbestimmten Amplitudenbereichs liegender Amplitude wenigstens ein während des Messzyklus in dem Ausgangssignal auftretender Signalpegel ermittelt wird, wobei ein Signalpegel lediglich dann ermittelt wird, wenn die diesen bestimmenden Abtastwerte einen Mindestanteil aller in den Messzyklus ermittelten Abtastwerte aufweisen.

Die Erfindung sieht somit vor, unabhängig von der maximalen Frequenz und gegenwärtigen Periodendauer des abgetasteten Ausgangssignals dieses mit einer vorbestimmten Abtastrate über einen Messzyklus bestimmter Dauer abzutasten. Dabei erhält man zeitdiskrete Abtastwerte verschiedener Amplitude als Messergebnis. Dieses Messergebnis wird dann in der Folge anhand der Häufigkeit des Auftretens von Abtastwerten mit innerhalb eines vorbestimmten Amplitudenbereichs liegender Amplitude untersucht. Anhand der ermittelten Häufigkeiten wird wenigstens ein Signalpegel ermittelt.

### Vorteilhafte Weiterbildung und Ausgestaltung der Erfindung

In einer Weiterbildung der Erfindung ist vorgesehen, dass anhand der Häufigkeit des Auftretens von Abtastwerten mit innerhalb eines vorbestimmten Amplitudenbereichs liegender Amplitude je Messzyklus ein Histogramm erstellt wird, aus welchem der Signalpegel ermittelt wird. Die Erstellung eines Histogramms hat den Vorteil, dass sich dadurch in sehr schnell erfassbarer und anschaulicher Weise ein oder mehrere Signalpegel ermitteln lassen. Es werden beispielsweise der oder die Signalpegel mit der relativ größten Häufigkeit von Abtastwerten mit innerhalb eines vorbestimmten Amplitudenbereichs liegender Amplitude weiterverarbeitet.

Zur Erfassung der Häufigkeiten ist in einer Erfindungsvariante vorgesehen, dass eine vorbestimmte Anzahl von Amplitudenzählern vorgesehen ist, wobei jedem Amplitudenzähler ein bestimmter Amplitudenbereich zugeordnet ist und wobei jeder Amplitudenzähler inkrementiert wird, wenn während des Messzyklus ein Abtastwert einen Amplitudenwert aufweist, der in den diesem zugeordneten Amplitudenbereich fällt. Hierbei kann vorgesehen sein, dass als Abtastwerte Stromwerte des Ausgangssignals ermittelt werden, und dass jedem Amplitudenzähler ein Stromwertbereich aus einem vorbestimmten Messbereich, vorzugsweise von 0 bis 19 mA, zugeordnet ist. Dabei können die Stromwertbereiche auch unterschiedlich groß bemessen sein, um den Messbereich stromwertabhängig unterschiedlich fein aufzuteilen. Um bei mehreren aufeinanderfolgenden Messzyklen vergleichbare Ergebnisse zu erhalten, kann in einer Weiterbildung der Erfindung vorgesehen sein, dass jeder Amplitudenzähler zu Beginn eines Messzyklus auf Null gesetzt wird.
Wie eingangs erläutert sieht die Erfindung vor, dass zur Abtastung des Ausgangssignals eine vorbestimmte die Abtastrate bestimmende Abtastfrequenz verwendet wird, welche unabhängig von der maximalen Frequenz und gegenwärtigen Periodendauer des Ausgangssignals ist. Um ein hinreichend genaues Abtastergebnis zu erhalten ist in einer Weiterbildung der Erfindung vorgesehen, dass eine Abtastfrequenz gewählt wird, die im Bereich von 100 bis 5000Hz, vorzugsweise im Bereich von 500 bis 2500Hz, besonders bevorzugt bei etwa 1000Hz liegt.

Hinsichtlich der Dauer eines Messzyklus sieht die Erfindung beispielsweise vor, dass der Messzyklus eine Zeitspanne im Bereich von 0,1s bis 5s, vorzugsweise im Bereich von 0,5s bis 2,5s, bevorzugt um etwa 1s umfasst. Derartige Messzyklen erlauben eine hinreichend genaue Drehzahlermittlung bei zugleich kurzer Reaktionszeit des die erfasste Raddrehzahl verwendenden elektronischen Steuerungssystems des Kraftfahrzeugs.

Um zu vermeiden, dass unter starken Störeinflüssen eine Vielzahl von Signalpegeln ermittelt wird, welche dann im Nachhinein auf ihre Brauchbarkeit untersucht werden müssen, sieht das erfindungsgemäße Verfahren in einer Weiterbildung vor, dass bestimmte Bedingungen aufgestellt werden, deren Erfüllung nach Erhalt eines Abtastergebnisses überprüft werden. So ist erfindungsgemäß beispielsweise vorgesehen, dass ein Signalpegel lediglich dann ermittelt wird, wenn die diesen bestimmenden Abtastwerte einen Anteil von wenigstens 10%, vorzugsweise wenigstens 15%, aller in dem Messzyklus ermittelten Abtastwerte aufweisen. Signalpegel, deren diese bestimmenden Abtastwerte einen kleineren Anteil aufweisen werden somit beispielsweise als Rauschen oder dergleichen "aussortiert".

Wie eingangs mit Bezug auf den Stand der Technik erläutert, kann es erforderlich sein, dass zwei Signalpegel erfasst werden müssen. Hierfür sieht das erfindungsgemäße Verfahren in einer Weiterbildung vor, dass diejenigen Signalpegel erfasst werden, deren Abtastwerte die beiden relativ am häufigsten auftretenden Amplitudenbereiche aufweisen. Alle übrigen ermittelten Signalpegel werden vorab ausgefiltert. Eine Weiterbildung der Erfindung sieht in diesem Zusammenhang vor, dass die beiden Signalpegel lediglich dann ermittelt werden, wenn die diese bestimmenden Abtastwerte zusammen einen Anteil von wenigstens 40%, vorzugsweise von wenigstens 50%, aller in dem Messzyklus ermittelten Abtastwerte aufweisen. Ist dieses Kriterium nicht erfüllt, so wird gemäß diesem Ausführungsbeispiel die entsprechende Messung als Fehlmessung angesehen. Ferner kann bei dem erfindungsgemäßen Verfahren vorgesehen sein, dass die beiden Signalpegel lediglich dann ermittelt bzw. zur Weiterverarbeitung freigegeben werden, wenn die Stromstärken um einen vorbestimmten Mindestdifferenzwert, vorzugsweise um wenigstens 1mA, voneinander abweichen. Durch diese Maßnahme lassen sich auch schwankende Amplitudenwerte zur Ermittlung eines bestimmten Signalpegels ausnutzen.

Die vorstehend angesprochenen Bedingungen können unterschiedlich logisch verknüpft sein. So ist es in einer Erfindungsvariante möglich, dass eine Erfüllung aller Bedingungen erforderlich ist, um einen Signalpegel zu ermitteln, man spricht in diesem Zusammenhang auch von einer konjunktiven Verknüpfung. Andere Erfindungsvarianten können hingegen vorsehen, dass lediglich eine der Bedingungen erfüllt sein muss, um einen Signalpegel zu ermitteln (disjunktive Verknüpfung) oder dass lediglich ein Teil der Bedingungen erfüllt sein muss.

In einer Weiterbildung der Erfindung kann vorgesehen sein, dass anhand des ermittelten Signalpegels eine Fehlerbehandlungsprozedur eingeleitet wird. Die Fehlerbehandlungsprozedur kann stets nach der Ermittlung eines Signalpegels oder nach Ablauf eines Messzyklus ablaufen und anhand von bestimmten Eigenschaften des ermittelten Signalpegels unterschiedliche Routinen starten. Beispielsweise kann durch die Fehlerbehandlungsprozedur ein entsprechendes elektronisches Steuerungssystem, wie beispielsweise ein Fahrzeugbremssystem oder ein Schlupfregelsystem, in einen Notbetriebsmodus umgeschaltet werden, in welchem Fehlfunktionen aufgrund mangelhafter Drehzahlermittlung ausgeschlossen werden. Die Fehlerbehandlungsprozedur kann erfindungsgemäß so eingerichtet werden, dass der Notbetriebsmodus beispielsweise erst nach Ablauf einer vorbestimmten Zeitperiode nach Ende des jeweiligen Messzyklus aktiviert wird. Die vorbestimmte Zeitperiode ist dabei derart bemessen, dass beispielsweise ein oder mehrere weitere Messzyklen abgewartet werden und deren Messergebnisse überprüft werden, bis schließlich sicher festgestellt werden kann, dass die Drehzahlerfassung dauerhaft zuverlässig oder fehlerhaft ist. Somit kann eine vorzeitige Aktivierung des Notbetriebsmodus vermieden werden. In der Fehlerbehandlungsprozedur kann die Plausibilität eines ermittelten Signalpegels ermittelt werden und ausgehend davon eine geeignete Routine, beispielsweise der Normalbetriebsmodus oder der Notbetriebsmodus, aktiviert werden.

In einer Weiterbildung des erfindungsgemäßen Verfahrens kann vorgesehen sein, dass die während des Messzyklus aufgetretenen Amplituden und die Häufigkeit des Auftretens von Abtastwerten mit innerhalb eines vorbestimmten Amplitudenbereichs liegender Amplitude zwischengespeichert werden.

Die Erfindung betrifft ferner eine Vorrichtung zum Erfassen von Drehzahlen, insbesondere Raddrehzahlen eines Rades eines Kraftfahrzeugs, mit einem Drehzahlsensor zur Erfassung eines die gegenwärtige Drehzahl beschreibenden Ausgangssignals, einer Abtasteinrichtung zum Abtasten des Ausgangssignals und einer Signalverarbeitungseinrichtung zur Weiterverarbeitung des von der Abtasteinrichtung abgetasteten Ausgangssignals. Die erfindungsgemäße Vorrichtung ist insbesondere zur Durchführung des vorstehend erörterten erfindungsgemäßen Verfahrens ausgebildet. Sie sieht erfindungsgemäß ferner vor, dass das Ausgangssignal mit einer vorbestimmten Abtastrate über wenigstens einen Messzyklus abgetastet wird, dass jeweils die Amplitude von in dem Messzyklus erhaltenen Abtastwerten ermittelt wird und dass anhand der Häufigkeit des Auftretens von Abtastwerten mit in einen vorbestimmten Amplitudenbereich fallender Amplitude wenigstens ein während des Messzyklus in dem Ausgangssignal auftretender Signalpegel ermittelt wird. Dabei kann die Abtasteinrichtung zum Ausgeben zeitdiskreter Abtastwerte ausgebildet sein. Ferner kann die Signalverarbeitungseinrichtung eine Zählereinrichtung zur Ermittlung der Häufigkeit des Auftretens von Abtastwerten mit innerhalb eines vorbestimmten Amplitudenbereichs liegender Amplitude während des Messzyklus umfassen. Diese Zählereinrichtung kann als Endloszähler ausgebildet sein, gleichermaßen ist es jedoch möglich, dass die Zählereinrichtung zu Beginn eines neuen Messzyklus auf einen Anfangswert, vorzugsweise auf "0", rücksetzbar ist.

Hinsichtlich der Ausgestaltung der Signalverarbeitungseinrichtung kann vorgesehen sein, dass diese einen Speicher zur Zwischenspeicherung der während des Messzyklus aufgetretenen Amplituden und der Häufigkeit des Auftretens von Abtastwerten mit innerhalb eines vorbestimmten Amplitudenbereichs liegender Amplitude aufweist. Ferner kann die erfindungsgemäße Vorrichtung, insbesondere deren Signalverarbeitungseinrichtung, wenigstens eine Auswerteeinrichtung zur Überprüfung vorbestimmter Eigenschaften des Ausgangssignals aufweisen. In einer Erfindungsvariante kann in diesem Zusammenhang vorgesehen sein, dass die Auswerteeinrichtung eine Ermittlung eines Signalpegels während eines Messzyklus dann zulässt, wenn die den Signalpegel bestimmenden Abtastwerte einen Anteil von wenigstens 10%, vorzugsweise von wenigstens 15%, an allen in dem Messzyklus erhaltenen Abtastwerte aufweisen. Zusätzlich oder alternativ kann die Erfindung vorsehen, dass die Auswerteeinrichtung während eines Messzyklus eine Ermittlung von lediglich einer vorbestimmten Anzahl von Signalpegeln, vorzugsweise von lediglich zwei Signalpegeln, dann zulässt, wenn die diese bestimmenden Abtastwerte zusammen einen Anteil von wenigstens 40%, vorzugsweise von wenigstens 50%, aller in dem Messzyklus erhaltenen Abtastwerte aufweisen. Schließlich kann in einer Weiterbildung der Erfindung vorgesehen sein, dass die Auswerteeinrichtung zusätzlich oder alternativ zu den vorstehend angesprochenen Funktionen eine Ermittlung einer Mehrzahl von Signalpegeln dann zulässt, wenn die diese bestimmenden Amplituden der Abtastwerte Stromstärken aufweisen, die um wenigstens 1mA voneinander abweichen.

### Kurzbeschreibung der Figuren

Die Erfindung wird im folgenden anhand der beiliegenden Figuren beispielhaft erläutert. Es stellen dar:
- Fig.1: eine schematische Darstellung der erfindungsgemäßen Vorrichtung in Form eines Blockschaltbilds;
- Fig.2: einen Graph, welcher verschiedene Signalverläufe des Ausgangssignals wiedergibt;
- Fig.3: ein Histogramm, welches die Verteilung von in einem Messzyklus erhaltenen Abtastwerten wiedergibt;
- Fig.4: ein Histogramm ähnlich Fig.3 welches eine fehlerhafte Messung zeigt und
- Fig.5: ein grobes Ablaufdiagramm des erfindungsgemäßen Verfahrens.

### Detaillierte Beschreibung von erfindungsgemäßen Ausführungsformen

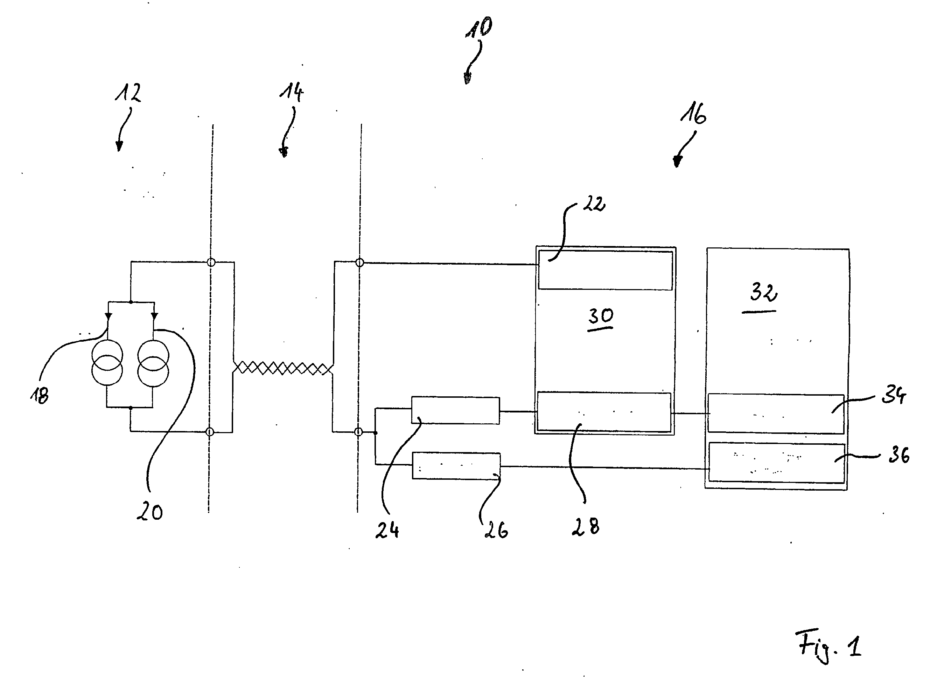

In Fig.1 ist eine erfindungsgemäße Vorrichtung allgemein mit 10 bezeichnet. Diese umfasst einen Raddrehzahlsensor 12, eine Verdrahtung 14 und eine Signalverarbeitungseinheit 16.

Der Fahrzeugsensor 12 umfasst zwei Signalwege, nämlich einen Signalweg 18, welcher einen "High"-Strom von beispielsweise 14mA liefert, wenn der Sensor 12 ein bestimmtes Ereignis, beispielsweise eine induktive Erregung erfasst, und den Signalweg 20, welcher einen "Low"-Strom von beispielsweise 7mA liefert, wenn der Sensor 12 in seinem Ruhezustand ist. Der Raddrehzahlsensor 12 ist über die Verdrahtung 14 mit der Signalverarbeitungseinheit 16 verbunden. Diese umfasst eine Spannungsversorgung 22 für den Raddrehzahlsensor 12, ein erstes Tiefpassfilter 24 und ein zweites Tiefpassfilter 26. Ferner umfasst die Signalverarbeitungseinheit 10 eine Auswerteeinrichtung 28, welche bestimmte Eigenschaften des von dem Tiefpassfilter 24 erhaltenen Ausgangssignals des Raddrehzahlsensors 12 abfrägt. Darauf soll im Folgenden noch im Detail eingegangen werden.

Die Spannungsversorgung 22 für den Raddrehzahlsensor 12 sowie das Abfragefilter 28 sind zu einem anwendungsspezifischen integrierten Schaltkreis (ASIC) 30 zusammengefasst. Dieser ist mit einem Hauptprozessor 32 verbunden. Der Hauptprozessor 32 umfasst einen hochauflösenden Zeitgeber 34 und einen Analog-Digital-Wandler 36. Der Zeitgeber 34 ist mit der Auswerteeinrichtung 28 verbunden. Der Analog-Digital-Wandler 36 ist mit dem Tiefpassfilter 26 verbunden.

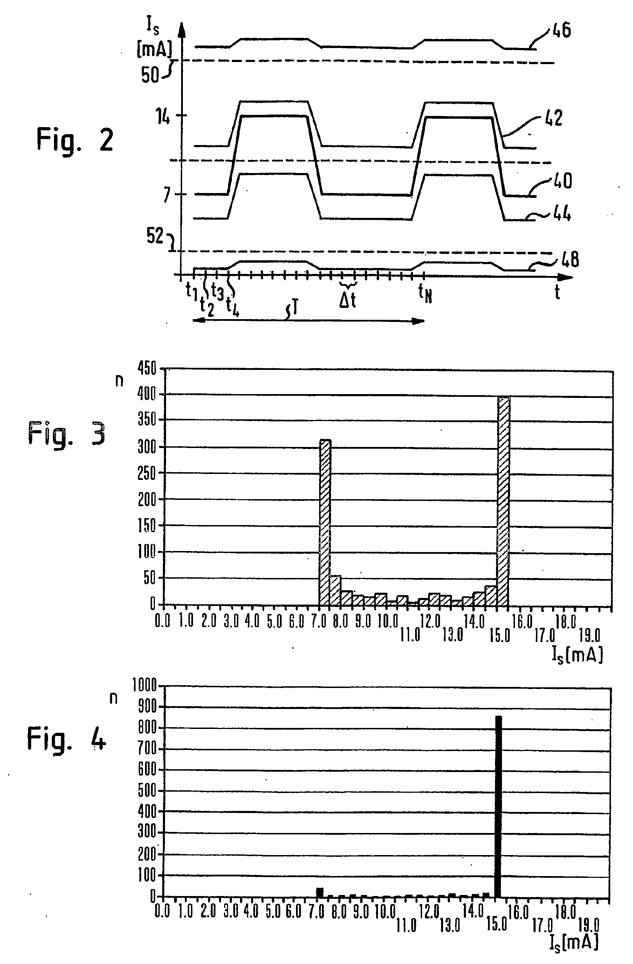

Die erfindungsgemäße Vorrichtung 10 gemäß Fig.1 erfasst mittels des Raddrehzahlsensors 12 eine Raddrehzahl und gibt ein entsprechendes analoges Wechselstromsignal über die Verdrahtung 14 an die Signalverarbeitungseinheit 16 ab. Dieses Ausgangssignal wird sodann zunächst über die Tiefpassfilter 24 und 26 gefiltert und einer Weiterverarbeitung unterzogen, die im Folgenden anhand der Figuren 2 bis 5 noch näher erläutert wird.

Fig.2 zeigt verschiedene Verläufe des analogen Ausgangssignals des Drehzahlsensors 12. In Fig.2 ist die Stromstärke Iₛ des Sensors 12 in mA über der Zeit aufgetragen. Ein idealer Verlauf des von dem Drehzahlsensor 12 ausgegebenen Ausgangssignals ist mit 40 bezeichnet. Dieser Signalverlauf 40 zeigt im wesentlichen zwei diskrete Signalpegel, nämlich einen "Low"-Pegel bei 7mA und einen "High"-Pegel bei 14mA. Anhand der Periodendauer des Wechsels der Signalpegel zwischen 7mA und 14mA lässt sich die Raddrehzahl ermitteln. Innerhalb einer vorbestimmten Zeitperiode T, welche in N gleiche Zeitabschnitte Δt unterteilt ist, wird das Ausgangssignal N-fach abgetastet. So erhält man zu jedem Zeitpunkt t₁, t₂, t₃,...t_{N} einen bestimmten Abtastwert mit einer diesem zugeordneten Signalamplitude, welche dem jeweiligen Signalpegel entspricht.

Fig.2 zeigt ferner, dass sich aufgrund von Störeinflüssen oder Fehlfunktionen des Drehzahlsensors 12 auch andere von dem Signalverlauf 40 abweichende Signalverläufe ergeben können. So sind beispielsweise die Signalverläufe 42 und 44, aufgrund von Störeinflüssen in der Fahrzeugelektronik, einer fehlerhaften Spannungsversorgung des Drehzahlsensors 12 oder dergleichen, zwar hinsichtlich der auftretenden Stromstärken gegenüber dem Signalverlauf 40 verschoben. Sie erlauben jedoch trotz dieser betragsmäßigen Verschiebung eine Drehzahlerfassung, da sie im wesentlichen zwei diskrete Strompegel zeigen. Allerdings kann bei derartigen aufgrund von Störeinflüssen oder fehlerhafter Funktion verschiedener Komponenten verschobenen Spannungssignalen 42 und 44 bereits eine Fehlererkennung erforderlich sein. Diese kann beispielsweise zu einer Deaktivierung verschiedener elektronischer Systeme aus Sicherheitsgründen führen. Herkömmliche Systeme vermögen eine derartige Fehlererkennung nicht oder nur unter hohem hardwaretechnischem Aufwand, um eine Abtastung nach dem Shannon-Abtasttheorem durchführen zu können.

Fig.2 zeigt ferner zwei weitere Signalverläufe 46, 48, welche oberhalb bzw. unterhalb bestimmter Schwellenwerte 50, 52 liegen. Derartige stark verschobene Signalverläufe lassen sich auch mit herkömmlichen Systemen bereits erkennen, beispielsweise dadurch, dass man Schwellenwertsensoren verwendet, die einen Kurzschluss oder eine Leitungsunterbrechung detektieren.

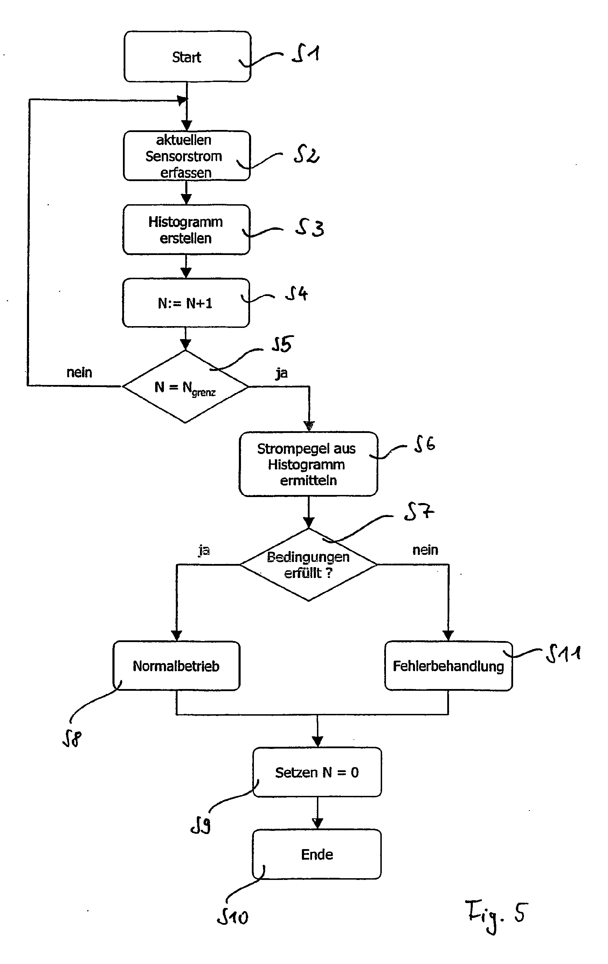

Erfindungsgemäß wird in dem Zeitintervall T das von dem Drehzahlsensor 12 ausgegebene Ausgangssignal N-fach abgetastet. Dies geschieht gemäß dem Ablaufdiagramm von Fig.5 nach dem Starten der Prozedur gemäß Schritt S1 in Schritt S2. Zu einem diskreten Zeitpunkt beispielsweise t₁, t₂, etc. wird jeweils der aktuelle Sensorstrom erfasst. Dabei wird die Amplitude des Sensorstroms erfasst und ein Amplitudenzähler, dem ein diese Amplitude umfassender Amplitudenbereich zugeordnet ist, um den Wert 1 inkrementiert.

Die jeweiligen Werte der Amplitudenzähler werden in Schritt S3 in ein Histogramm gemäß Fig.3 eingetragen. In diesem sind die jeweiligen Zählstände n über die Amplitudenwerte aufgetragen. Mit anderen Worten ist jedem Amplitudenwert zwischen 0 und 19mA mit einer Amplitudenbereichsweite von jeweils 0,5mA ein Amplitudenzähler zugeordnet. Das Abfragen des aktuellen Sensorstroms gemäß Schritt S2 und das Eintragen in ein Histogramm gemäß Schritt S3 wird N-fach durchgeführt. Dies bedeutet, dass in Schritt S4 nach jeder Abfrage ein Zähler N inkrementiert wird und in Schritt S5 überprüft wird, ob ein Grenzwert, beispielsweise der Wert 1000 bei einer Abtastfrequenz von 1000Hz, bereits erreicht ist. Ist dies nicht erreicht, so werden die Schritte S2 bis S5 erneut durchgeführt. Ist die Bedingung gemäß Schritt S5 allerdings erfüllt, so ist der gegenwärtige Messzyklus abgeschlossen und es kann eine Ermittlung von Strom aus Strompegeln aus dem Histogramm gemäß Fig.3 erfolgen.

Fig.3 zeigt weiter, dass während des Messzyklus in dem Amplitudenbereich zwischen 7 und 7,5mA Abtastwerte mit einer Häufigkeit von etwa 315 aufgetreten sind und in dem Amplitudenbereich zwischen 15 und 15,5mA Abtastwerte mit einer Häufigkeit von etwa 395 aufgetreten sind. Die übrigen Häufigkeiten von Abtastwerten mit abweichenden Amplituden liegen deutlich darunter. Die nächst kleinere Häufigkeit liegt bei etwa 55. Fig.3 lässt nun eine einfache Ermittlung der beiden das Ausgangssignal 40 kennzeichnenden Signalpegel zu, indem jeweils ein Amplitudenwert aus den beiden Amplitudenbereichen mit den während des Messzyklus relativ am häufigsten aufgetretenen Abtastwerten als Signalpegel verwendet wird. Dies erfolgt in Schritt S6 von Fig.5. Die übrigen Abtastwerte ergeben sich beispielsweise aufgrund einer Abtastung während einer aufsteigenden oder abfallenden Flanke oder aufgrund von Störeinflüssen.

Fig.4 zeigt ein Histogramm, welches von dem Histogramm gemäß Fig.3 stark abweicht. Nach diesem Histogramm liegt die Häufigkeit von Abtastwerten in einem Messzyklus bei etwa 860 für Amplituden zwischen 15,0 und 15,5mA. Die übrigen Abtastwerte mit davon abweichender Amplitude treten mit nahezu vernachlässigbarer Häufigkeit auf. Lediglich die Abtastwerte mit einer Amplitude zwischen 7,0 und 7,5mA treten noch mit einer Häufigkeit von etwa 40 auf. Ein Histogramm entsprechend Fig.4 ergibt sich beispielsweise dann, wenn die Abtastrate N pro Messzyklus weitgehend mit der Frequenz des von dem Drehzahlsensor 12 ausgegebenen Ausgangssignals übereinstimmt. Dies bedeutet, dass eine Abtastung des Ausgangssignals weitgehend jedes Mal dann erfolgt, wenn dieses Signal einen bestimmten Signalpegel erreicht hat, beispielsweise den "High"-Strom. Bei anderen Signalpegeln erfolgt entsprechend der vorbestimmten Abtastrate vergleichsweise selten eine Abtastung. Ein Histogramm entsprechend Fig.4 kann allerdings nicht zur Bestimmung zweier Strompegel verwendet werden.

Um Messzyklen mit verwertbaren Messergebnissen von Messzyklen mit unbrauchbaren Messergebnissen zu unterscheiden, ist bei einer Ausführungsform der Erfindung vorgesehen, dass die Signalverarbeitungseinheit 16 das Ausgangssignal des Drehzahlsensors 12 auf die Erfüllung vorbestimmter Bedingungen überprüft. Dies erfolgt in Schritt S7. Derartige Bedingungen können sein:
- die zu den beiden zu bestimmenden Signalpegeln gehörenden Amplitudenzählerstände müssen jeweils einen Mindestanteil aller Messungen enthalten, beispielsweise 15% oder 20% oder mehr;
- die zu den zu ermittelnden Signalpegeln gehörenden Amplitudenzählerstände müssen höher sein als die Summe aller restlichen Zählerstände, welche sich aus Messungen während der Flanke oder durch Störeinflüsse ergeben,
- die Differenz zwischen den beiden Signalpegeln muss mindestens einen bestimmten Stromstärkenbetrag, beispielsweise 1mA, betragen.

Diese Bedingungen können logisch miteinander verknüpft sein, beispielsweise konjunktiv oder disjunktiv. Im vorliegenden Ausführungsbeispiel sind sie konjunktiv verknüpft, das heißt, es muss jede der Bedingungen erfüllt sein, um eine wirksame Signalpegelermittlung zuzulassen. Ergibt sich in Schritt S7 gemäß Fig.5, dass alle Bedingungen erfüllt sind, so kann das Histogramm entsprechend ausgewertet werden, das heißt die Strompegel ermittelt werden und zur weiteren Signalverarbeitung eingesetzt werden können. Dies ist durch Schritt S8 dargestellt. In der Folge wird der Zähler N auf Null gesetzt und (Schritt S9) und die Prozedur daraufhin in Schritt S10 beendet, so dass sie für einen weiteren Messzyklus wieder gestartet werden kann. Ergibt sich allerdings in Schritt S7, dass nicht alle vorbestimmten Bedingungen von den aus dem Histogramm ermittelten Strompegeln erfüllt werden, so wird gemäß Schritt S11 eine Fehlerbehandlungsprozedur eingeleitet, welche beispielsweise eine Deaktivierung eines Schlupfregelungssystems oder dergleichen zur Folge haben kann.

Die Erfindung zeigt somit eine verhältnismäßig einfach durchzuführende und insbesondere mit geringem hardwaretechnischen Aufwand realisierbare Möglichkeit, zuverlässig die Funktion eines Drehzahlsensors zu überwachen und dessen Ausgangssignal abzutasten.

## Patentansprüche

1. Verfahren zum Erfassen von fehlerhaften Sensorsignalen bei der Erfassung einer Drehzahl, insbesondere einer Drehzahl eines Rades eines Kraftfahrzeugs, mittels eines Drehzahlsensors (12), wobei der Drehzahlsensor (12) ein die aktuelle Drehzahl charakterisierendes Ausgangssignal ausgibt und wobei das Ausgangssignal des Drehzahlsensors (12) mit einer vorbestimmten Abtastrate (N) über wenigstens einen Messzyklus (T) abgetastet wird und jeweils die Amplitude von in dem Messzyklus (T) erhaltenen Abtastwerten ermittelt wird,
**dadurch gekennzeichnet, dass** anhand der Häufigkeit (n) des Auftretens von Abtastwerten mit innerhalb eines vorbestimmten Amplitudenbereichs liegender Amplitude wenigstens ein während des Messzyklus (T) in dem Ausgangssignal auftretender Signalpegel ermittelt wird, wobei ein Signalpegel lediglich dann ermittelt wird, wenn die diesen bestimmenden Abtastwerte einen Mindestanteil aller in dem Messzyklus (T) ermittelten Abtastwerte aufweisen.

2. Verfahren nach Anspruch 1, **dadurch gekennzeichnet,**
**dass** anhand der Häufigkeit (n) des Auftretens von Abtastwerten mit innerhalb eines vorbestimmten Amplitudenbereichs liegender Amplitude je Messzyklus (T) ein Histogramm erstellt wird, aus welchem der Signalpegel ermittelt wird.

3. Verfahren nach Anspruch 1 oder 2, **dadurch gekennzeichnet,**
**dass** eine vorbestimmte Anzahl von Amplitudenzählern vorgesehen ist, wobei jedem Amplitudenzähler ein bestimmter Amplitudenbereich zugeordnet ist und wobei jeder Amplitudenzähler inkrementiert wird, wenn während des Messzyklus (T) ein Abtastwert einen Amplitudenwert aufweist, der in den diesem zugeordneten Amplitudenbereich fällt.

4. Verfahren nach Anspruch 3, **dadurch gekennzeichnet,**
**dass** als Abtastwerte Stromwerte des Ausgangssignals ermittelt werden, und dass jedem Amplitudenzähler ein Stromwertbereich aus einem vorbestimmten Messbereich, vorzugsweise von 0 bis 19 mA, zugeordnet ist.

5. Verfahren nach Anspruch 3 oder 4, **dadurch gekennzeichnet,**
**dass** jeder Amplitudenzähler zu Beginn eines Messzyklus (T) auf Null gesetzt wird.

6. Verfahren nach einem der vorangehenden Ansprüche, **dadurch gekennzeichnet, dass** eine die Abtastrate (N) bestimmende Abtastfrequenz gewählt wird, die im Bereich von 100 bis 5000Hz, vorzugsweise im Bereich von 500 bis 2500Hz, besonders bevorzugt bei etwa 1000Hz liegt.

7. Verfahren nach einem der vorangehenden Ansprüche, **dadurch gekennzeichnet, dass** der Messzyklus (T) eine Zeitspanne im Bereich von 0,1s bis 5s, vorzugsweise im Bereich von 0,5s bis 2,5s, bevorzugt um etwa 1s umfasst.

8. Verfahren nach einem der vorangehenden Ansprüche, **dadurch gekennzeichnet, dass** ein Signalpegel lediglich dann ermittelt wird, wenn die diesen bestimmenden Abtastwerte einen Anteil von wenigstens 10%, vorzugsweise wenigstens 15%, aller in dem Messzyklus (T) ermittelten Abtastwerte aufweisen.

9. Verfahren nach einem der vorangehenden Ansprüche, **dadurch gekennzeichnet, dass** zwei Signalpegel anhand der Abtastwerte der beiden relativ am häufigsten auftretenden Amplitudenbereiche ermittelt werden.

10. Verfahren nach Anspruch 8 und 9, **dadurch gekennzeichnet,**
**dass** die beiden Signalpegel lediglich dann ermittelt werden, wenn die diese bestimmenden Abtastwerte zusammen einen Anteil von wenigstens 40%, vorzugsweise von wenigstens 50%, aller in dem Messzyklus (T) ermittelten Abtastwerte aufweisen.

11. Verfahren nach Anspruch 9 oder 10, **dadurch gekennzeichnet,**
**dass** die beiden Signalpegel lediglich dann ermittelt werden, wenn deren Stromwert um einen vorbestimmten Mindestdifferenzwert, vorzugsweise von wenigstens 1mA voneinander abweichen.

12. Verfahren nach einem der vorangehenden Ansprüche, **dadurch gekennzeichnet, dass** anhand des ermittelten Signalpegels eine Fehlerbehandlungsprozedur eingeleitet wird.

13. Verfahren nach Anspruch 12, **dadurch gekennzeichnet,**
**dass** die Fehlerbehandlungsprozedur erst nach Ablauf einer vorbestimmten Zeitperiode nach Ende des Messzyklus (T) in Abhängigkeit des ermittelten Signalpegels einen Notbetriebsmodus einleitet.

14. Verfahren nach einem der vorangehenden Ansprüche, **dadurch gekennzeichnet, dass** die während des Messzyklus (T) aufgetretenen Amplituden und die Häufigkeit (n) des Auftretens von Abtastwerten mit innerhalb eines vorbestimmten Amplitudenbereichs liegender Amplitude zwischengespeichert werden.

15. Vorrichtung (10) zum Erfassen von fehlerhaften Sensorsignalen bei der Erfassung von Drehzahlen, insbesondere Raddrehzahlen eines Rades eines Kraftfahrzeugs, umfassend:
- einen Drehzahlsensor (12) zur Erfassung eines die gegenwärtige Drehzahl beschreibenden Ausgangssignals,
- eine Abtasteinrichtung (30) zum Abtasten des Ausgangssignals mit einer vorbestimmten Abtastrate (N) je Messzyklus (T) und
- eine Signalverarbeitungseinrichtung (32) zur Weiterverarbeitung des von der Abtasteinrichtung (30) abgetasteten Ausgangssignals und zur Ermittlung der Amplituden von in dem Messzyklus (T) erhaltenen Abtastwerten,
**dadurch gekennzeichnet,**
**dass** die Signalverarbeitungseinrichtung (32) ausgebildet ist, anhand der Häufigkeit (n) des Auftretens von Abtastwerten mit innerhalb eines vorbestimmten Amplitudenbereichs liegender Amplitude wenigstens einen während des Messzyklus (T) in dem Ausgangssignal auftretenden Signalpegel zu ermitteln, wobei die Auswerteinnchtung ausgebildet ist, eine Ermittlung eines Signalpegels während eines Messzyklus (T) dann zuzulassen, wenn die den Signalpegel bestimmenden Abtastwerte einen Mindestanteil an allen in dem Messzyklus erhaltenen Abtastwerten aufweisen.

16. Vorrichtung (10) nach Anspruch 15, **dadurch gekennzeichnet,**
**dass** die Abtasteinrichtung (30) zum Ausgeben zeitdiskreter Abtastwerte ausgebildet ist.

17. Vorrichtung (10) nach Anspruch 15 oder 16, **dadurch gekennzeichnet,**
**dass** die Signalverarbeitungseinrichtung (32) eine Zählereinrichtung zur Ermittlung der Häufigkeit (n) des Auftretens von Abtastwerten mit innerhalb eines vorbestimmten Amplitudenbereichs liegender Amplitude während des Messzyklus (T) umfasst.

18. Vorrichtung (10) nach Anspruch 17, **dadurch gekennzeichnet,**
**dass** die Zählereinrichtung zu Beginn eines neuen Messzyklus (T) auf einen Anfangswert, vorzugsweise auf "0", rücksetzbar ist.

19. Vorrichtung (10) nach einem der Ansprüche 15 bis 18, **dadurch gekennzeichnet, dass** die Signalverarbeitungseinrichtung (32) einen Speicher zur Zwischenspeicherung der während des Messzyklus (T) aufgetretenen Amplituden und der Häufigkeit (n) des Auftretens von Abtastwerten mit innerhalb eines vorbestimmten Amplitudenbereichs liegender Amplitude aufweist.

20. Vorrichtung (10) nach einem der Ansprüche 15 bis 19, **dadurch gekennzeichnet, dass** die Signalverarbeitungseinrichtung (32) wenigstens eine Auswerteinrichtung zur Überprüfung vorbestimmter Eigenschaften des Ausgangssignals aufweist.

21. Vorrichtung (10) nach Anspruch 20, **dadurch gekennzeichnet, dass** die Auswerteinrichtung eine Ermittlung eines Signalpegels während eines Messzyklus (T) dann zulässt, wenn die den Signalpegel bestimmenden Abtastwerte einen Anteil von wenigstens 10%, vorzugsweise von wenigstens 15%, an allen in dem Messzyklus (T) erhaltenen Abtastwerte aufweisen.

22. Vorrichtung (10) nach Anspruch 20 oder 21, **dadurch gekennzeichnet,**
**dass** die Auswerteinrichtung während eines Messzyklus (T) eine Ermittlung von lediglich einer vorbestimmten Anzahl von Signalpegeln, vorzugsweise von lediglich zwei Signalpegeln, dann zulässt, wenn die diese bestimmenden Abtastwerte zusammen einen Anteil von wenigstens 40%, vorzugsweise von wenigstens 50%, aller in dem Messzyklus (T) erhaltenen Abtastwerte aufweisen.

23. Vorrichtung (10) nach einem der Ansprüche 20 bis 22, **dadurch gekennzeichnet, dass** die Auswerteinrichtung eine Ermittlung einer Mehrzahl von Signalpegeln lediglich dann zulässt, wenn die diese bestimmenden Amplituden der Abtastwerte Stromwerte aufweisen, die um wenigstens einen vorbestimmten Mindestdifferenzwert, vorzugsweise um wenigstens 1mA, voneinander abweichen.

## Claims

1. Method of measuring erroneous sensor signals by the measuring of rotational speed, in particular a rotational speed of a wheel of a motor vehicle, by means of a speed sensor (12), wherein the speed sensor (12) produces an output signal characterizing the actual rotational speed and wherein the output signal of the speed sensor (12) is sampled at a predetermined sampling rate (N) over at least one measuring cycle (T) and in each case the amplitude of sampled values obtained in the measuring cycle (T) is determined, **characterized in that** from a rate (n) of occurrence of sampled values of an amplitude lying within a predetermined amplitude range at least one signal level occurring during the measuring cycle (T) in the output signal is determined, wherein a signal level is determined only when the sample values determining the signal level comprise a minimum fraction of all sampled values determined in the measuring cycle (T).

2. Method according to claim 1, **characterized in that**
from the rate (n) of occurrence of sampled values of an amplitude lying within a predetermined amplitude range per measuring cycle (T) a histogram is created from which the signal level is determined.

3. Method according to claim 1 or 2, **characterized in that**
a predetermined number of amplitude counters is provided, wherein to each amplitude counter a specific amplitude range is assigned and wherein each amplitude counter is incremented when during the measuring cycle (T) a sampled value has an amplitude value that falls within the amplitude range assigned thereto.

4. Method according to claim 3, **characterized in that**
current values of the output signal are determined as sampled values and that a current value range from a predetermined measuring range, preferably from 0 to 19 mA, is assigned to each amplitudes counter.

5. Method according to claim 3 or 4, **characterized in that**
each amplitude counter is set to zero at the start of a measuring cycle (T).

6. Method according to one of the preceding claims, **characterized in that**
a sampling frequency determining the sampling rate is selected which is in the range of 100 to 5000Hz, preferably in the range of 500 to 2500Hz, particularly preferably at about 1000Hz.

7. Method according to one of the preceding claims, **characterized in that**
the measuring cycle (T) comprises a period of time in the range of 0,1s to 5s, preferably in the range of 0,5s to 2,5s, preferentially at about 1s.

8. Method according to one of the preceding claims, **characterized in that**
a signal level is determined only when the sampled values determining the signal level comprise a fraction of at least 10%, preferably at least 15%, of all of the sampled values determined in the measuring cycle (T).

9. Method according to one of the preceding claims, **characterized in that**
two signal levels are determined from the sampled values of the two relatively most frequently occurring amplitude ranges.

10. Method according to claim 8 and 9, **characterized in that**
the two signal levels are determined only when the sampled values determining the signal levels together comprise a fraction of at least 40%, preferably of at least 50%, of all the sampled values determined in the measuring cycle (T).

11. Method according to claim 9 or 10, **characterized in that**
the two signal levels are determined only when their current value differ from one another by a predetermined minimum differential value of preferably at least 1mA.

12. Method according to one of the preceding claims, **characterized in that**
on the basis of the determined signal level an error handling procedure is initiated.

13. Method according to claim 12, **characterized in that**
the error handling procedure initiates an emergency operating mode only after a predetermined period of time after the end of the measuring cycle (T) in dependence of the determined signal level.

14. Method according to one of the preceding claims, **characterized in that**
the amplitudes that have occurred during the measuring cycle (T) and the rate (n) of occurrence of sampled values of an amplitude lying within a predetermined amplitude range are stored temporarily

15. Apparatus (10) for measuring erroneous sensor signals by the measuring of rotational speed, in particular wheel speeds of a wheel of a motor vehicle, comprising:
- a speed sensor (12) for measuring an output signal describing the actual rotational speed,
- a sampling device (30) for sampling the output signal at a predetermined sampling rate (N) per measuring cycle (T) and
- a signal processing device (32) for further processing of the output signal sampled by the sampling device (30) and for determining the amplitudes of sampled values obtained in the measuring cycle (T),
**characterized in that**
the signal processing device (32) is adapted to determine from a rate (n) of occurrence of sampled values of an amplitude lying within a predetermined amplitude range at least one signal level occurring during the measuring cycle (T) in the output signal, wherein the signal processing device is designed to allow a determination of a signal level during the measuring cycle (T) when the sampled values determining the signal level comprise a minimum fraction of all sampled values comprised in the measuring cycle.

16. Apparatus (10) according to claim 15, **characterized in that**
the sampling device (30) is designed to output time-discrete sampled values.

17. Apparatus (10) according to claim 15 or 16, **characterized in that**
the signal processing device (32) comprises a counting device for determining the rate (n) of occurrence of sampled values of an amplitude lying within a predetermined amplitude range during the measuring cycle (T).

18. Apparatus (10) according to claim 17, **characterized in that**
the counting device is resettable, in particular to "0", to an initial value at the start of a new measuring cycle (T).

19. Apparatus (10) according to one of the claims 15 to 18, **characterized in that** the signal processing device (32) comprises a memory for temporarily storing the amplitudes that have occurred during the measuring cycle (T) and the rate (n) of occurrence of sampled values of an amplitude lying within a predetermined amplitude range.

20. Apparatus (10) according to one of the claims 15 to 19, **characterized in that**
the signal processing device (32) comprises at least one evaluation device for checking predetermined properties of the output signal.

21. Apparatus (10) according to claim 20, **characterized in that**
the evaluation device allows a determination of a signal level during a measuring cycle (T) when the sampled values determining the signal level comprise a fraction of at least 10%, preferably of at least 15%, of all of the sampled values obtained in the measuring cycle (T).

22. Apparatus (10) according to claim 20 or 21, **characterized in that**
the evaluation device during a measuring cycle (T) allows a determination of only a predetermined number of signal levels, preferably of only two signal levels when the sampled values determining the signal levels together comprise a fraction of at least 40%, preferably of at least 50%, of all of the sampled values obtained in the measuring cycle (T).

23. Apparatus (10) according to one of the claims 20 to 22, **characterized in that**
the evaluation device allows a determination of a plurality of signal levels only when the amplitudes of the sampled values determining the signal levels comprise current values that differ from one another by at least a predetermined minimum differential value, preferably of at least 1mA.

## Revendications

1. Procédé de détection de signaux défectueux lors de la détection d'une vitesse de rotation, en particulier d'une vitesse de rotation d'une roue d'un véhicule, au moyen d'un capteur de vitesse de rotation (12), dans le cadre duquel le capteur de vitesse de rotation (12) émet un signal de sortie caractéristique de la vitesse de rotation momentanée, le signal de sortie du capteur de vitesse de rotation (12) étant détecté à une vitesse d'échantillonnage prédéterminée (N) pendant au moins un cycle de mesure (T) et l'amplitude des valeurs d'échantillonnage obtenues au cours du cycle de mesure (T) étant respectivement déterminée,
**caractérisé en ce qu'**au moins un niveau de signal survenant dans le signal de sortie pendant le cycle de mesure (T) est déterminé sur la base de la fréquence (n) d'apparition de valeurs d'échantillonnage dont l'amplitude se situe dans une plage d'amplitude prédéterminée, un niveau de signal étant déterminé uniquement lorsque les valeurs d'échantillonnage déterminant celui-ci présentent une proportion minimale de toutes les valeurs d'échantillonnage déterminées pendant le cycle de mesure (T).

2. Procédé selon la revendication 1,
**caractérisé en ce qu'**un histogramme, à partir duquel sera déterminé le niveau de signal, est établi sur la base de la fréquence (n) d'apparition des valeurs d'échantillonnage, dont l'amplitude se situe dans une plage d'amplitude prédéterminée.

3. Procédé selon la revendication 1 ou 2,
**caractérisé en ce qu'**il est prévu un nombre prédéterminé de compteurs d'amplitude, une plage d'amplitude donnée étant attribuée à chacun des compteurs d'amplitude et chaque compteur d'amplitude étant incrémenté lorsqu'une valeur d'échantillonnage présente pendant le cycle de mesure (T) une valeur d'amplitude qui tombe dans la plage d'amplitude attribuée à celui-ci.

4. Procédé selon la revendication 3,
**caractérisé en ce que** des valeurs de courant du signal de sortie sont déterminées en tant que valeurs d'échantillonnage et qu'il est attribué à chaque compteur d'amplitude une plage de valeurs de courant comprise dans une plage de mesure prédéterminée, préférentiellement comprise entre 0 et 19 mA,.

5. Procédé selon la revendication 3 ou 4,
**caractérisé en ce que** chaque compteur d'amplitude est mis à zéro au début d'un cycle de mesure (T).

6. Procédé selon l'une des revendications précédentes,
**caractérisé en ce qu'**il est choisi une fréquence d'échantillonnage déterminant la vitesse d'échantillonnage (N) située dans une plage comprise entre 100 et 5000 Hz, de préférence entre 500 et 2500 Hz, et plus préférentiellement d'env. 1000 Hz.

7. Procédé selon l'une des revendications précédentes,
**caractérisé en ce que** le cycle de mesure (T) comprend un intervalle de temps situé dans une plage comprise entre 0,1 s et 5 s, de préférence entre 0,5 s et 2,5 s, et préférentiellement d'env. 1 s.

8. Procédé selon l'une des revendications précédentes,
**caractérisé en ce qu'**un niveau de signal est déterminé uniquement lorsque les valeurs d'échantillonnage déterminant celui-ci présentent une proportion égale à au moins 10%, de préférence à au moins 15% de toutes les valeurs d'échantillonnage déterminées pendant le cycle de mesure (T).

9. Procédé selon l'une des revendications précédentes,
**caractérisé en ce qu'**il est déterminé deux niveaux de signal sur la base des valeurs d'échantillonnage des deux plages d'amplitude apparaissant relativement le plus fréquemment.

10. Procédé selon les revendications 8 et 9,
**caractérisé en ce que** les deux niveaux de signal sont déterminés uniquement lorsque les valeurs d'échantillonnage déterminant ceux-ci présentent conjointement une proportion égale à au moins 40%, de préférence à au moins 50% de toutes les valeurs d'échantillonnage déterminées pendant le cycle de mesure (T).

11. Procédé selon la revendication 9 ou 10,
**caractérisé en ce que** les deux niveaux de signal sont déterminés uniquement lorsque leur valeur de courant divergent l'une de l'autre d'une valeur différentielle minimale prédéterminée, préférentiellement d'au moins 1 mA.

12. Procédé selon l'une des revendications précédentes,
**caractérisé en ce qu'**il est déclenché une procédure de traitement d'erreurs sur la base d'un niveau de signal déterminé.

13. Procédé selon la revendication 12,
**caractérisé en ce qu'**en fonction d'un niveau de signal déterminé, la procédure de traitement d'erreurs déclenche un mode de secours uniquement après écoulement d'un laps de temps prédéterminé après achèvement du cycle de mesure (T).

14. Procédé selon l'une des revendications précédentes,
**caractérisé en ce que** les amplitudes apparues pendant le cycle de mesure (T) et la fréquence (n) d'apparition des valeurs d'échantillonnage, dont l'amplitude se situe dans une plage d'amplitude prédéterminée, sont enregistrées temporairement.

15. Dispositif (10) de détection de signaux défectueux lors de la détection de vitesses de rotation, en particulier de vitesses de rotation d'une roue d'un véhicule, comportant
- un capteur de vitesse de rotation (12) pour la détection d'un signal de sortie décrivant la vitesse de rotation momentanée,
- un dispositif d'échantillonnage (30) pour l'échantillonnage du signal de sortie à une vitesse d'échantillonnage prédéterminée (N) par cycle de mesure (T) et
- un dispositif de traitement de signal (32) pour le traitement du signal de sortie échantillonné par le dispositif d'échantillonnage (30) et pour la détermination des amplitudes de valeurs d'échantillonnage obtenues au cours du cycle de mesure (T), **caractérisé en ce que** le dispositif de traitement de signal (32) est conçu pour déterminer, sur la base de la fréquence (n) d'apparition des valeurs d'échantillonnage, dont l'amplitude se situe dans une plage d'amplitude prédéterminée, au moins un niveau de signal survenant dans le signal de sortie pendant le cycle de mesure (T), le dispositif d'évaluation étant est conçu pour autoriser une détermination d'un niveau de signal uniquement lorsque les valeurs d'échantillonnage déterminant le niveau de signal présentent une proportion minimale de toutes les valeurs d'échantillonnage obtenues pendant le cycle de mesure (T).

16. Dispositif (10) selon la revendication 15,
**caractérisé en ce que** le dispositif d'échantillonnage (30) est conçu pour émettre des valeurs d'échantillonnage discrètes dans le temps.

17. Dispositif (10) selon la revendication 15 ou 16,
**caractérisé en ce que** le dispositif de traitement de signal (32) comporte un dispositif de comptage pour déterminer la fréquence d'apparition (n), pendant le cycle de mesure (T), des valeurs d'échantillonnage dont l'amplitude se situe dans une plage d'amplitude prédéterminée.

18. Dispositif (10) selon la revendication 17,
**caractérisé en ce que** le dispositif de comptage peut, au début d'un nouveau cycle de mesure (T), être remis à une valeur initiale, de préférence à "0".

19. Dispositif (10) selon l'une des revendications 15 à 18,
**caractérisé en ce que** le dispositif de traitement de signal (32) présente une mémoire intermédiaire pour enregistrer temporairement les amplitudes apparaissant pendant le cycle de mesure (T) et la fréquence (n) d'apparition des valeurs d'échantillonnage, dont l'amplitude se situe dans une plage d'amplitude prédéterminée.

20. Dispositif (10) selon l'une des revendications 15 à 19,
**caractérisé en ce que** le dispositif de traitement de signal (32) présente au moins un dispositif d'évaluation pour contrôler les propriétés prédéterminées du signal de sortie.

21. Dispositif (10) selon la revendication 20,
**caractérisé en ce que** le dispositif d'évaluation autorise à déterminer un niveau de signal pendant un cycle de mesure (T) uniquement lorsque les valeurs d'échantillonnage déterminant le niveau de signal présentent une proportion égale à au moins 10%, de préférence à au moins 15% de toutes les valeurs d'échantillonnage obtenues pendant le cycle de mesure (T).

22. Dispositif (10) selon la revendication 20 ou 21,
**caractérisé en ce que** le dispositif d'évaluation autorise à déterminer pendant un cycle de mesure (T) uniquement un nombre prédéterminé de niveaux de signal, de préférence seulement deux niveaux de signal, lorsque les valeurs d'échantillonnage déterminant ceux-ci présentent conjointement une proportion égale à au moins 40%, de préférence à au moins 50% de toutes les valeurs d'échantillonnage obtenues pendant le cycle de mesure (T).

23. Dispositif (10) selon l'une des revendications 20 à 22,
**caractérisé en ce que** le dispositif d'évaluation autorise à déterminer une pluralité de niveaux de signal uniquement lorsque les amplitudes des valeurs d'échantillonnage déterminant ceux-ci présentent des valeurs de courant divergeant les unes des autres d'au moins une valeur différentielle minimale prédéterminée, de préférence d'au moins 1 mA.
